# EUROPÄISCHE PATENTANMELDUNG

(11) **EP 3 985 563 A1**
(43) Veröffentlichungstag der Anmeldung: **20.04.2022**
(21) Anmeldenummer: 21202642.1
(22) Anmeldetag: 14.10.2021
(51) Int. Cl.: G06K 19/077, B32B 5/24

(54) **CHIPKARTE**

(30) Priorität: 15.10.2020 DE 102020127160
(71) Anmelder: Skidata GmbH, 5083 Grödig/Salzburg (AT); exceet Card Austria GmbH, 6175 Kematen in Tirol (AT)
(72) Erfinder: IRLINGER, Josef, 5083 Grödig/Salzburg (AT); WOLNY, Robert, 6175 Kematen in Tirol (AT); GSCHOSSMANN, Benedikt, 5083 Grödig/Salzburg (AT); WASMEIER, Wolfgang, 5083 Grödig/Salzburg (AT)
(74) Vertreter: Karakatsanis, Georgios

(57) **Zusammenfassung**

Es wird eine Chipkarte (1) vorgeschlagen, umfassend einen Chip (9), welche als Schichtverbund ausgeführt ist, deren Sichtseiten (2) als Schichten aus Holzfurnier ausgeführt sind, wobei zwischen den Sichtseiten (2) ein als Prälaminat (3) ausgeführter Kern angeordnet ist, welcher ein an beiden Seiten mit jeweils einer Schicht (5) aus Papier oder Pappe verbundenes Papiersubstrat (4) aufweist, auf dem der Chip (9) und falls vorhanden eine Antenne (10) angeordnet sind.

## Beschreibung

Die vorliegende Erfindung bezieht sich auf eine Chipkarte gemäß dem Oberbegriff des Patentanspruchs 1.

Chipkarten werden nach dem Stand dem Technik oft als Datenträger benutzt, beispielsweise in Form von Kreditkarten, Identitätskarten, Zugangs-, Geld- oder Transponderkarten. Sie umfassen einen Chip, der in der Regel einen integrierten Schaltkreis, Speichermittel und weitere elektronische Komponenten aufweist und in Abhängigkeit der jeweiligen Verwendung eine mit dem Chip verbundene Antenne.

Aus dem Stand der Technik ist bekannt, derartige Karten aus Plastikmaterialien, insbesondere PVC oder PET herzustellen, wobei in diese Karten ein Chip und ggf. eine Antenne eingebaut sind.

Angesichts der Notwendigkeit, die Verwendung von Plastikmaterialien zu reduzieren, liegt der vorliegenden Erfindung die Aufgabe zugrunde, eine Chipkarte anzugeben, welche überwiegend aus natürlichen, erneuerbaren Materialien hergestellt und äußerst robust und dennoch biegsam ist.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Chipkarte vorgeschlagen, umfassend einen Chip, welche als Schichtverbund ausgeführt ist, deren Sichtseiten als Schichten aus Holzfurnier ausgeführt sind, wobei zwischen den Sichtseiten ein als Prälaminat ausgeführter Kern angeordnet ist, welcher ein an beiden Seiten mit jeweils einer Schicht aus Papier oder Pappe verbundenes Papiersubstrat aufweist, auf dem der Chip und falls vorhanden eine Antenne der Chipkarte angeordnet sind.

Gemäß einer Weiterbildung der Erfindung ist zwischen dem Prälaminat und der jeweiligen aus Holzfurnier hergestellten Sichtseite der Chipkarte eine Zwischenschicht aus Vliesstoff vorgesehen.

Die Schichten der erfindungsgemäßen Chipkarte sind vorzugsweise miteinander verklebt.

Das Prälaminat weist demnach ein Papiersubstrat auf, auf dem der Chip angeordnet ist und welches zwischen zwei Schichten aus Papier oder Pappe angeordnet und mit diesen verklebt ist. Für den Fall, dass die Chipkarte eine Antenne aufweist, sind die Antenne und der Chip vorzugsweise als eine Einheit auf dem Substrat angeordnet.

Der Aufbau der erfindungsgemäßen Chipkarte resultiert in vorteilhafter Weise einer stabilisierenden Wirkung; die Chipkarte ist äußerst robust und dennoch biegsam.

Gemäß einer besonders vorteilhaften Ausgestaltung der Erfindung ist vorgesehen, dass eine der Schichten aus Papier und/oder Pappe des Prälaminats als Passepartout ausgeführt ist, in das eine Aussparung ausgestanzt ist, welche den auf dem Papiersubstrat angeordneten Chip aufnimmt. Für den Fall, dass die Chipkarte eine Antenne aufweist, ist diese auf dem Papiersubstrat angeordnet. Durch diese Ausgestaltung wird der Vorteil erzielt, dass die Dicke der Chipkarte bei hoher Robustheit gering und gleichförmig gehalten werden kann. Ferner wird die Lebensdauer der Karte durch Verminderung von Chip oder Kontaktbrüchen verlängert.

Gemäß weiterer Ausgestaltungen der Erfindung kann auf dem Holzfurnier einer Sichtseite oder beider Sichtseiten der Chipkarte ganz oder teilweise ein thermisch bedruckbarer Lack aufgetragen sein, um ein Bedrucken der Chipkarte zu ermöglichen.

Die erfindungsgemäße Chipkarte kann überall eingesetzt werden, wo nach dem Stand der Technik ausgeführte Chipkarten eingesetzt werden; beispielsweise kann eine erfindungsgemäße Chipkarte als passive RFID- oder NFC-Chipkarte, als Geldkarte, als Zugangskarte, Identitätskarte oder als Kreditkarte ausgeführt sein.

Die Erfindung wird im Folgenden anhand der beigefügten Figuren beispielhaft näher erläutert. Es zeigen:
Figur 1: eine schematische Explosionsansicht zur Veranschaulichung des allgemeinen Aufbaus einer Chipkarte gemäß der Erfindung:
Figur 2: Eine schematische Explosionsschnittansicht zur Veranschaulichung des Aufbaus einer Chipkarte gemäß einer Ausgestaltung der Erfindung; und
Figur 3: Eine schematische Explosionsschnittansicht zur Veranschaulichung des Aufbaus des Prälaminats der Chipkarte gemäß Figur 2.

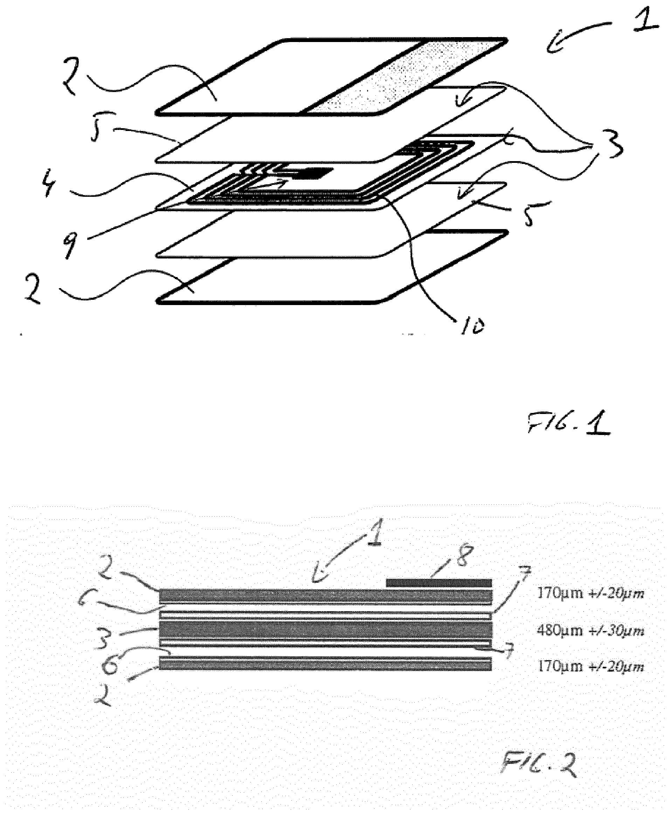

Gemäß der Erfindung und bezugnehmend auf Figur 1 ist eine erfindungsgemäße Chipkarte 1 als Schichtverbund ausgeführt, wobei die Sichtseiten 2 der Chipkarte 1 als Schichten aus Holzfurnier ausgeführt sind. Beispielsweise kann das Holzfurnier aus Kirschholz hergestellt sein. Wie Figur 1 zu entnehmen, ist zwischen den Sichtseiten 2 ein als Prälaminat ausgeführter Kern 3 angeordnet, der ein an beiden Seiten mit jeweils einer Schicht 5 aus Papier oder Pappe verbundenes Papiersubstrat 4 aufweist, auf dem der Chip 9 der Chipkarte 1 und eine Antenne 10 angeordnet sind. Vorzugsweise sind der Chip 9 und die Antenne 10 als eine Einheit auf dem Papiersubstrat 4 angeordnet.

Bei dem in Figur 2 gezeigten Beispiel ist zwischen dem Prälaminat 3 und der jeweiligen aus Holzfurnier hergestellten Sichtseite 2 der Chipkarte 1 eine Zwischenschicht 6 aus Vliesstoff vorgesehen; mit dem Bezugszeichen 7 sind Klebstoffschichten bezeichnet. Ferner sind in Figur 2 typische Werte der Dicke der einzelnen Schichten angegeben; in vorteilhafter Weise entspricht die Dicke der Chipkarte 1 bei dem gezeigten Beispiel der Standard-Dicke üblicher nach dem Stand der Technik ausgeführter Chipkarten.

Bei dem in Figur 2 gezeigten Beispiel ist auf einer Sichtseite 2 der Chipkarte 1 teilweise ein thermisch bedruckbarer Lack 8 aufgetragen, um ein Bedrucken der Chipkarte 1 zu ermöglichen.

Die Schichten der Chipkarte 1 werden mittels der Klebstoffschichten 7 miteinander verbunden, wobei zur Verbindung von Schichten der Chipkarte 1 in Abhängigkeit des gewählten Klebstoffes eine "Quasi-Laminierung" unter reduzierter Wärmezufuhr und reduziertem Druck durchgeführt wird.

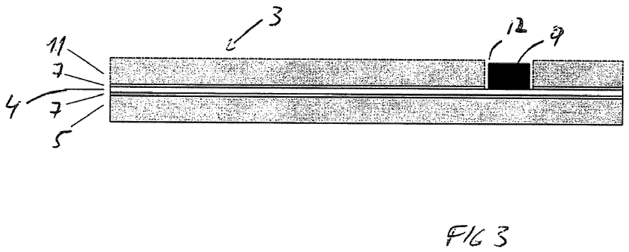

Der Aufbau des in Figur 2 dargestellten Prälaminats 3 ist Gegenstand der Figur 3. Hierbei ist eine der Schichten aus Papier und/oder Pappe des Prälaminats 3 als Passepartout 11 ausgeführt, in das eine Aussparung 12 ausgestanzt ist, welche den auf dem Papiersubstrat 4 angeordneten Chip 9 aufnimmt. Durch diese Ausgestaltung wird der Vorteil erzielt, dass die Dicke der Chipkarte 1 gering und gleichförmig gehalten werden kann, ohne die erzielbare Robustheit negativ zu beeinträchtigen. Durch die Aussparung wird eine ansonsten auftretende Erhöhung an der Chipposition verhindert, wodurch die Chipkarte "planer" wird..

Wenn die Chipkarte 1 eine Antenne aufweist, ist diese auf dem Papiersubstrat 4 angeordnet, wobei die Antenne und der Chip vorzugsweise als eine Einheit auf dem Substrat 4 angeordnet werden und der Chip 9 in der Aussparung 12 aufgenommen wird. In Figur 3 sind mit dem Bezugszeichen 7 die Klebstoffschichten bezeichnet, welche der Verbindung des Papiersubstrats 4 mit dem Passepartout 11 und der Schicht 5 aus Papier oder Pappe dienen.

## Patentansprüche

1. Chipkarte (1), umfassend einen Chip (9), **dadurch gekennzeichnet, dass** sie als Schichtverbund ausgeführt ist, deren Sichtseiten (2) als Schichten aus Holzfurnier ausgeführt sind, wobei zwischen den Sichtseiten (2) ein als Prälaminat (3) ausgeführter Kern angeordnet ist, welcher ein an beiden Seiten mit jeweils einer Schicht (5) aus Papier oder Pappe verbundenes Papiersubstrat (4) aufweist, auf dem der Chip (9) und falls vorhanden eine Antenne (10) angeordnet sind.

2. Chipkarte (1) nach Anspruch 1, **dadurch gekennzeichnet, dass** zwischen dem Prälaminat (3) und der jeweiligen aus Holzfurnier hergestellten Sichtseite (2) der Chipkarte (1) eine Zwischenschicht (6) aus Vliesstoff vorgesehen ist.

3. Chipkarte (1) nach Anspruch 1 oder 2, **dadurch gekennzeichnet, dass** eine der Schichten aus Papier und/oder Pappe des Prälaminats (3) als Passepartout (11) ausgeführt ist, in das eine Aussparung (12) ausgestanzt ist, welche den auf dem Papiersubstrat (4) angeordneten Chip (9) aufnimmt.

4. Chipkarte (1) nach Anspruch 1, 2 oder 3, **dadurch gekennzeichnet, dass** die Chipkarte 1 eine Antenne (10) aufweist, welche auf dem Papiersubstrat (4) angeordnet ist, wobei die Antenne (10) und der Chip (9) als eine Einheit auf dem Substrat (4) angeordnet sind.

5. Chipkarte (1) nach Anspruch 1, 2, 3 oder 4, **dadurch gekennzeichnet, dass** auf dem Holzfurnier einer Sichtseite (2) oder beider Sichtseiten (2) der Chipkarte (1) ganz oder teilweise ein thermisch bedruckbarer Lack aufgetragen ist, um ein Bedrucken der Chipkarte (1) zu ermöglichen.

6. Chipkarte (1) nach Anspruch 1, 2, 3, 4 oder 5, **dadurch gekennzeichnet, dass** das Holzfurnier der Sichtseiten (2) der Chipkarte (1) aus Kirschholz hergestellt ist.

7. Chipkarte (1) nach einem der vorangehenden Ansprüche, **dadurch gekennzeichnet, dass** die Schichten der Chipkarte (1) mittels Klebstoffschichten (7) miteinander verbunden sind.

8. Chipkarte (1) nach Anspruch 7, **dadurch gekennzeichnet, dass** zur Verbindung von Schichten der Chipkarte (1) in Abhängigkeit des gewählten Klebstoffes eine "Quasi-Laminierung" unter reduzierter Wärmezufuhr und reduziertem Druck durchgeführt wird.

9. Chipkarte (1) nach einem der vorangehenden Ansprüche, **dadurch gekennzeichnet, dass** sie als passive RFID- oder NFC-Chipkarte, als Geldkarte, als Zugangskarte, als Identitätskarte oder als Kreditkarte ausgeführt ist.
